# EUROPEAN PATENT SPECIFICATION

(11) **EP 0 797 623 B1**
(45) Date of publication and mention of the grant of the patent: **04.10.2001**
(21) Application number: 95939296.0
(22) Date of filing: 05.12.1995
(51) Int. Cl.: C08L 23/08, C08J 5/18

(54) **PLASTIC MATERIAL FOR PACKAGES**
PLASTIKMATERIAL FÜR VERPACKUNGEN
MATERIAU PLASTIQUE POUR EMBALLAGES

(30) Priority: 12.12.1994 FI 945827
(43) Date of publication of application: 01.10.1997
(73) Proprietor: E.I. DU PONT DE NEMOURS AND COMPANY, Wilmington Delaware 19898 (US)
(72) Inventor: SAINIO, Markku, FIN-06100 Porvoo (FI); SEPPÄNEN, Hanneli, FIN-00930 Helsinki (FI); LAIHO, Erkki, FIN-06450 Porvoo (FI)
(74) Representative: Bannerman, David Gardner
(86) International application number: FI9500664
(87) International publication number: WO9618680

(56) References cited:
- EP-A- 0 042 831
- EP-A- 0 538 139
- WO-A-94/11434
- CA-A- 1 265 277
- DIALOG INFORMATION SERVICES, File 351, World Patent Index 81-96, Dialog Accession No. 008428356, WPI Accession No. 90-315357/42, TOSOH CORP, "Adhesive for Food Container - Comprises Ethylene-Vinyl-Acetate Copolymer"; & JP,A,02 222 479, (05-09-1990), 9042, (BASIC).
- DIALOG INFORMATION SERVICES, File 351, World Patent Index 81-96, Dialog Accession No. 007119228, WPI Accession No. 87-119225/17, CEMEDINE KK, "Pressure-Sensitive Self-Adhesive Cold Sealer Compsn. Contains Ethylenel-Type Copolymer Resin Contg. (alpha-Methyl) Styrenel Copolymer, Tackifying Resin and Solvent; Alpha Methyl Ethylene Polyvinyl Acetate"; & JP,A,62 062 876, (19-03-1987), 8717, (BASIC).

## Description

The invention relates to a process for making a peelable polymer composition suitable for the production of films, sheets and lamination and coating products.

In the packaging industry it is conventional that a product is packaged in a plastic film or a rigid plastic package and the package is heat sealed. The seal must possess a mechanical resistance sufficient to maintain the tight-seal properties during storage and transport. It is required that the package can be opened without destroying the product inside but to a growing extend it must also be possible to open the package without destroying the integrity of the film itself. The seal must be easily openable by pulling with hands without scissors or other instruments, the seal must be peelable. The package can also be used after opening for instance as a serving or heating disk (yoghurt, micro-oven food) or the whole product is not taken away instantly but is kept in the opened package (candies, cereals).

The peelable seal can be defined to be the seal or joint between two films or sheets produced by heat sealing or impulse sealing, the joint thus formed having the property of being openable by pulling with hands. The seal can be between two films or two sheets or between a film or sheet and some substrate. Depending on the substrate an adhesion layer may sometimes be needed between the layers in the sheet or film.

The use of peelable seals in different packages has come more common with the development of packaging technique. There is a special need in the food processing industry, where there are applications in all sections, e.g. dairy products (cheeses, fats, yoghurt), frozen food products, ready-processed food, canned food, meat and meat products, different snack and sweet packages. A very fast growing group is ready processed food and canned food which is heated mainly in microwave oven.

In peelable compositions has most commonly been used as one component polybutylene and as another ethylene polymer, most often ethylene/vinylacetate copolymer (EVA) or low density polyethylene (LDPE). Also polypropylene can be included in the compositions. For instance in US patent 4.759.984 is given a polymer composition, where the main component is EVA (75-92 % by weight) and minor amounts of polybutylene (6-25 % by weight) and polypropylene (2-15 % by weight) have been blended to it. Polyamide or polycarbonate are the most suitable substrates.

In the patent publication EP 196.727 there is given a multilayer structure in which one layer consists of a polymer blend comprising 65-95 % by weight linear low density polyethylene (LLDPE) and 5-35 % by weight polypropylene and/or polyisobutylene.

In the patent applications FI925182, FI942154 and FI942173 is given peelable polymer compositions containing ethylene copolymers like ethylene/butyl(meth)acrylate copolymer or ethylene/methyl(meth)acrylate copolymer and a vinyl monomer, preferably styrene grafted ethylene polymer, which is preferably ethylene/butyl(meth)acrylate-, ethylene/methyl(meth)acrylate or ethylene/vinylacetate copolymer. The ethylene copolymer has been grafted with the vinyl monomer in a separate reactor.

The aim of this invention is to achieve a polymer composition, which is sealable and peelable in a broad temperature area and which blend is made by melt blending the polystyrene and an ethylene copolymer and by further mixing the achieved blend with the ethylene copolymer by conventional mixing technique, either by melt blending or by dry blending. Thus the most complicated part of the process for making the peelable blend, the styrene grafting, can be ignored.

Characteristic for the polymer composition made according to this invention is that the styrene content in the final composition is 1-50 % by weight, preferably 5-30 % by weight. The first blend contains 1-80 % by weight polystyrene and 99-20 % by weight ethylene copolymer. The amount of polystyrene in the first blending stage depends on the equipment used, on the polymers used and the final application.

Most preferably ethylene copolymer is ethylene/methyl(meth)acrylate, ethylene/ethyl(meth)acrylate, ethylene/butylacrylate orethylene/vinylacetate copolymer. Methylacrylate content of ethylene/methylacrylate copolymer can be 5-40 weight-% , preferably 16-25 weight-%. Ethylacrylate content of ethylene/ethylacrylate copolymer can be 10-30 weight-%. Butylacrylate content of ethylene butylacrylate copolymer can be 5-30 weight-%. Vinyl acetate content in ethylene vinylacetate copolymer is 10-30 weight-%.

The blend of polystyrene and the ethylene copolymer is made by using conventional methods for making polymer blends, like melt blending in a single- or twin-screw extruder or in Banbury mixer. When this blend is "diluted" with ethylene copolymers, it is desirable to used dry blending, but also melt blending can be used. The final peelable polymer composition is thus the blend obtained after the melt blending and the second blending.

Polymer compositions can also contain small amounts of conventional polymer additives such as antioxidants, antiblocking agents, antistatic agents etc.

The composition according to the invention can be used in manufacturing conventional packages containing peelable seals. From the polymer composition it can be produced blown or cast films or sheets as well as lamination and coating products which are peelable. Also multilayer structures in which one layer is made of film or sheet of the composition can be produced. It is typical for the compositions according to the invention that they are suitable to be used above different substrates like paper, oriented polypropylene, polyamide, polyethylene terephthalate.

Conventional cup or tray materials used in packages, like polystyrene, polypropylene, polyethylene and polyethylene terephthalate can be used, as well as also paperboard coated with plastic, e.g. polyethylene.

The invention is described more in detail in the following examples.

The peeling temperatures and the seal strengths of the polymer compositions according to the invention were investigated in the examples. Applications were extrusion coating in which a 2-layer structure on the paper was used, and blown films. The films were both 2-layered and 3-layered, in which case also one adhesion polymer layer was used. The following materials were used in the experiments:
LD-polyethylene = NCPE 4524, melt index 5.0
HD-polyethylene = H960, melt index 7.0
Polypropylene, PP = XB18 50B, melt index 1.8
Ethylene/methylacrylate copolymer, E/MA = NCPE 5620, acrylate content 20 %, melt index 5.0
Polystyrene, PS = PS-164, produced by Neste Oy
Adhesion polymer = Modic P300 F, produced by Mitsubishi

All above mentioned materials, except polystyrene and the adhesion polymer, are produced by Borealis Polymers Oy. The melt flow index is measured by the method ISO 1133 and the melting point by the method ISO 3146.

### Example 1

The first polymer blend was made by melt blending the ethylene/methylmethacrylate copolymer and polystyrene with a weight ratio 50/50 so that the kneader parameters were 50-55 rpm, 60-70 kW and the melt temperature 160-165 °C. The rotating speed of the extruder was 70-80 rpm and the power 33-38 amps. The blend was cut to pellets. This blend was used in all examples 1 - 3 (= Blend 1).

The peelable polymer blend was made by dry blending 30 % by weight of the before described Blend 1 and 80 % by weight ethylene/methylacrylate copolymer.

A two layer structure was made in a Beloit extrusion coating line, in which LDPE was against the paper and the sealable layer was made from the polymer blend described above. The temperature for polyethylene (LDPE) was 320 °C and for the peelable blend 260 °C. The speed was 100 m/min. The thickness of the LDPE layer was 15 g/m² and of the peelable layer 25 g/m².

Lids with a diameter of 75 mm were cut from the samples and they were sealed to polypropylene and polystyrene cups with KOPP's laboratory sealing machine. So called flat teflonated cup sealing heads were used. The sealing time was 0.5 s and the sealing pressure 0.5 N/mm². The temperature area when the seal was peelable was from polypropylene cups about 160-250 °C and the opening strength of the seal 5-10 N and the temperature area from polystyrene cups was about 190-250 °C and the opening strength 5-18 N.

### Example 2

20 % by weight of Blend 1 and 80 % by weight ethylene/methylacrylate were dry blended.

With a Reifenhäuser blown film line a two-layer film was made, which had HD-polyethylene as a substrate and the above mentioned polymer blend as a peelable layer. The thickness of the substrate layer was 150 *µ*m and the thickness of the peelable layer 30 *µ*m. The blow-up ratio in film blowing was 2.5. The temperature profile of the HD-polyethylene extruder was 200-220-230-230-230-230-220-220 and of the extruder for peelable blend 160-180-190-190-200-230-230-230, when the temperature in die was 230 °C.

Lids with 75 mm diameter were cut from the films and they were sealed with KOPP's laboratory sealing machine with a flat teflonated cup sealing head. The sealing time was 0.5 s and the sealing pressure 0.5 N/mm². The peelable temperature area from the polypropylene cup was 230-270 °C. The opening strength of the seal was 3-7 N.

### Example 3

A dry blend similar to Example 2 was made.

With a Reifenhäuser blown film line a three-layer film was made, which had polypropylene as a substrate, Modic P300 F as an adhesion layer and the above mentioned polymer blend as a peelable layer. The thickness of the substate layer was 150 *µ*m and the thickness of the peelable layer 30 *µ*m. The blow-up ratio in film blowing was 2.5. The temperature profile of the polypropylene extruder was 200-210-220-220-220-220-220-220 and of the extruder for peelable blend 160-180-190-190-200-220-220-220, when the temperature in die was 220 °C.

Lids with 75 mm diameter were cut from the films and they were sealed as in Example 2. The peelable temperature area from the polypropylene cup was 240-250 °C. The opening strength of the seal was 3-7 N.

The films were sealed also to themselselves with Kopp's laboratory sealing machine to which had a straight nonprofiled teflonated sealing head, width 10 mm. The peelable temperature area was 90-120 °C. The opening strength of the seal was 3-5 N/25 mm.

## Claims

1. A method for manufacturing a sealable and peelable polymer blend **characterised in that** polystyrene and an ethylene copolymer are first melt blended to obtain a first blend containing 1-80% by weight polystyrene and 99-20% by weight ethylene copolymer and the first blend is further mixed with the same ethylene copolymer either by melt blending or dry blending so that the final polymer blend contains 1-50% by weight polystyrene and 99-50% by weight ethylene copolymer.

2. A method according to claim 1, **characterised in that** the final blend contains 5-30% by weight polystyrene and 95-70% by weight ethylene copolymer.

3. A method according to claim 1 or 2, **characterised in that** the second mixing is made by dry blending.

4. A method according to claim 1 or 2, **characterised in that** the second mixing is made by melt blending.

5. A method according to claim 1 to 4, **characterised in that** ethylene copolymer is ethylene/methyl(meth)acrylate copolymer containing 5-40% by weight methyl(meth)acrylate.

6. A method according to any of claims 1 to 4, **characterised in that** ethylene copolymer is ethylene/ethyl(meth)acrylate copolymer containing 10-30% by weight ethyl(meth)acrylate.

7. A method according to any of claims 1 to 4, **characterised in that** ethylene copolymer is ethyl/butyl(meth)acrylate copolymer containing 5-30% by weight butyl(meth)acrylate.

8. A method according to any of claims 1 to 8, **characterised in that** ethylene copolymer is ethylene/vinylacetate copolymer containing 10-30% by weight vinylacetate.

9. A method according to any of the preceding claims, **characterised in that** polystyrene is high impact polystyrene.

## Patentansprüche

1. Verfahren zur Herstellung eines verschweißbaren und ablösbaren Polymergemisches, **dadurch gekennzeichnet, daß** Polystyrol und ein Ethylencopolymer zuerst zur Gewinnung eines ersten Gemisches verschmolzen werden, das 1-80 Gew-% Polystyrol und 99-20 Gew.-% Ethylencopolymer enthält und das erste Gemisch weiterhin mit demselben Ethylencopolymer entweder durch Verschmelzen oder durch Trockenmischen vermischt wird, so **daß** das Endpolymergemisch 1-50 Gew-% Polystyrol und 99-50 Gew.-% Ethylencopolymer enthält.

2. Verfahren nach Anspruch 1, **dadurch gekennzeichnet, daß** das Endgemisch 5-30 Gew.-% Polystyrol und 95-70 Gew.-% Ethylencopolymer enthält.

3. Verfahren nach Anspruch 1 oder 2, **dadurch gekennzeichnet, daß** das zweite Mischen durch Trockenmischen durchgeführt wird.

4. Verfahren nach Anspruch 1 oder 2, **dadurch gekennzeichnet, daß** das zweite Mischen durch Verschmelzen durchgeführt wird.

5. Verfahren nach Anspruch 1 bis 4, **dadurch gekennzeichnet, daß** das Ethylencopolymer Ethylen/Methyl(meth)acrylatcopolymer ist, das 5-40 Gew.-% Methyl(meth)acrylat enthält.

6. Verfahren nach einem der Ansprüche 1 bis 4, **dadurch gekennzeichnet, daß** das Ethylencopolymer Ethylen/Ethyl(meth)acrylatcopolymer ist, das 10-30 Gew.-% Ethyl(meth)acrylat enthält.

7. Verfahren nach einem der Ansprüche 1 bis 4, **dadurch gekennzeichnet, daß** das Ethylencopolymer Ethyl/Butyl (meth) acrylatcopolymer ist, das 5-30 Gew.-% Butyl(meth)acrylat enthält.

8. Verfahren nach einem der Ansprüche 1 bis 8, **dadurch gekennzeichnet, daß** das Ethylencopolymer Ethylen/Vinylacetatcopolymer ist, das 10-30 Gew.-% Vinylacetat enthält.

9. Verfahren nach einem der vorhergehenden Ansprüche, **dadurch gekennzeichnet, daß** das Polystyrol hochschlagfestes Polystyrol ist.

## Revendications

1. Procédé pour fabriquer un mélange à base de polymères qui soit étanche et pelable
**caractérisé en ce qu'**
• on mélange tout d'abord par fusion du polystyrène et un copolymère d'éthylène pour obtenir un premier mélange contenant de 1 à 80 % en poids de polystyrène et de 99 à 20 % en poids de copolymère d'éthylène, et
• on mélange ensuite le premier mélange avec le même copolymère d'éthylène, soit par mélange par fusion, soit par mélange à sec, de manière à ce que le mélange final à base de polymères contienne de 1 à 50 % en poids de polystyrène et de 99 à 50 % en poids de copolymère d'éthylène.

2. Procédé selon la revendication 1,
**caractérisé en ce que**
le mélange final contient de 5 à 30 % en poids de polystyrène et 95 à 70 % en poids de copolymère d'éthylène.

3. Procédé selon la revendication 1 ou 2,
**caractérisé en ce que**
le second mélange est effectué par mélange à sec.

4. Procédé selon l'une quelconque des revendications 1 ou 2,
**caractérisé en ce que**
le second mélange est effectué par mélange par fusion.

5. Procédé selon l'une quelconque des revendications 1 à 4,
**caractérisé en ce que**
le copolymère d'éthylène est un copolymère d'éthylène/-méthyl(méth)acrylate contenant de 5 à 40 % en poids de méthyl(méth)acrylate.

6. Procédé selon l'une quelconque des revendications 1 à 4,
**caractérisé en ce que**
le copolymère d'éthylène est un copolymère d'éthylène/-éthyl(méth)acrylate contenant de 10 à 30 % en poids d'éthyl(méth)acrylate.

7. Procédé selon l'une quelconque des revendications 1 à 4,
**caractérisé en ce que**
le copolymère d'éthylène est un copolymère d'éthylène/-butyl(méth)acrylate contenant de 5 à 30 % en poids de butyl(méth)acrylate.

8. Procédé selon l'une quelconque des revendications 1 à 7,
**caractérisé en ce que**
le copolymère d'éthylène est un copolymère d'éthylène/-acétate de vinyle contenant de 10 à 30 % en poids d'acétate de vinyle.

9. Procédé selon l'une quelconque des revendications précédentes,
**caractérisé en ce que**
le polystyrène est un polystyrène à haute résistance au choc.
